# EUROPÄISCHE PATENTSCHRIFT

(11) **EP 3 447 078 B1**
(45) Veröffentlichungstag und Bekanntmachung des Hinweises auf die Patenterteilung: **08.01.2020**
(21) Anmeldenummer: 17187505.7
(22) Anmeldetag: 23.08.2017
(51) Int. Cl.: C08G 18/79, C08G 18/38

(54) **CHEMISCHER DÜBEL UND DESSEN VERWENDUNG**
CHEMICAL DOWEL AND ITS USE
CHEVILLE CHIMIQUE ET SON UTILISATION

(43) Veröffentlichungstag der Anmeldung: 27.02.2019
(73) Patentinhaber: HILTI Aktiengesellschaft, 9494 Schaan (LI)
(72) Erfinder: Marauska, Juliane, 86199 Augsburg (DE); Thiemann, Frank, 86899 Landsberg/Lech (DE)
(74) Vertreter: Hilti Aktiengesellschaft Corporate Intellectual Property

(56) Entgegenhaltungen:
- US-A1- 2016 083 563

## Beschreibung

Die Erfindung betrifft einen chemischen Dübel aus einer Mehrkomponentenmasse auf Basis von Polyisocyanatverbindungen und die Verwendung des chemischen Dübels zur chemischen Befestigung von Bauteilen in Bohrlöchern, die in einen mineralischen Untergrund eingebracht sind.

Als chemische Dübel sind Polymersysteme auf der Basis von radikalisch härtenden Verbindungen wie Methacrylatharzen oder Epoxysysteme auf der Basis von Epoxidharzen und Aminhärtern bekannt. Diese haben jedoch einige Nachteile wie beispielsweise die Temperaturabhängigkeit der Aushärtung, oder sie zeigen je nach dem verwendeten System unterschiedliche Haftabzugswerte, wobei schnellhärtende Systeme auf Basis von radikalisch härtenden Verbindungen im Allgemeinen schlechtere Haftabzugswerte aufweisen als die langsamhärtenden Epoxysysteme. Neuentwicklungen auf dem Gebiet der chemischen Dübel beschränken sich daher auf eine Verbesserung entweder der radikalisch härtenden Systeme oder der Epoxysysteme mit Bezug auf die in diesen Systemen vorhandenen Nachteile, oder es wird versucht, weitere Anwendungen zu erschließen, wie etwa die Abstimmung der Systeme auf unterschiedliche Untergründe.

Die DE 10 2006 054 471 A1 beschreibt chemische Dübel, die aus Mehrkomponenten-Kunstharzsystemen auf der Grundlage von Epoxidharzen, Polyurethan oder Polyharnstoff und deren Mischungen oder aus alkoxysilanterminierten Präpolymeren gebildet sind. Mehrkomponenten-Kunstharzsysteme aus Epoxidharz, Polyester, Polyurethan, Acrylpolyurethan, Polyharnstoff, Polyurethan-Polyharnstoffmischprodukten, (Meth)acrylatharz, sonstigen radikalisch härtbaren Harzen und Polyesteramid, sowie Systeme auf Basis von alkoxysilanterminierten Präpolymeren werden außerdem in der DE 10 2006 036 438 A1 beschrieben.

Aus der DE 10 2008 018 861 A1 sind ferner Mehrkomponenten-Systeme auf der Grundlage von Polyharnstoff/Polyurethan bekannt, die aus einem oder mehreren Di- und/oder Polyisocyanaten, einem oder mehreren Di- und/oder Polyolen oder Di- und/oder Polyaminen oder einer oder mehreren di- und/oder polyfunktionellen Amino-, Hydroxy- und/oder Amino- und Hydroxyverbindungen gebildet sind.

Die EP 0 403 921 A2 beschreibt ein Verfahren zur Beschichtung beliebiger Substrate mit einem Zweikomponenten-Beschichtungsmittel, das als Bindemittel ein Gemisch von Polyisocyanaten und einer Reaktivkomponente aufweist, die wenigstens zum Teil ein Polyasparaginsäurederivat umfasst. Aus der EP 0 743 332 A1 ist ein Aspartatfunktionelles Hydantoin-Präpolymer bekannt, das hergestellt wird, indem man in einem Äquivalentverhältnis von Aspartat- zu Isocyanatgruppen von 1,05:1 bis 10:1 ein Polyisocyanat mit einer Funktionalität von wenigstens 1,8 mit einem Polyasparaginsäurederivat umsetzt.

Aufgabe der vorliegenden Erfindung war die Bereitstellung einer Mehrkomponentenmasse für chemische Dübel, bei der die Aushärtungszeit von sehr schnell (60 s) bis langsam (1 d) einstellbar ist und die Haftabzugsfestigkeit und die innere Festigkeit im Vergleich zu bekannten Dübelmassen erhalten bleibt.

Diese Aufgabe wird gelöst durch einen chemischen Dübel nach Anspruch 1 und durch die Verwendung des chemischen Dübels nach Anspruch 14.

Bevorzugte Ausführungsformen sind in den Unteransprüchen angegeben, die wahlweise miteinander kombiniert werden können.

Gemäß seiner allgemeinen Ausführungsform umfasst der erfindungsgemäße chemische Dübel eine Mehrkomponenten-Kunstharzmasse mit mindestens einer Polyisocyanatkomponente und einer Polyasparaginsäureesterkomponente.

Als Polyisocyanatkomponente können alle dem Fachmann bekannten aliphatischen und/oder aromatischen Isocyanate mit einer mittleren NCO-Funktionalität von 2 oder größer, einzeln oder in beliebigen Mischungen untereinander, verwendet werden.

Geeignete aromatische Polyisocanate sind solche mit aromatisch gebundenen Isocyanatgruppen, wie Diisocyanatobenzole, Touloldiisocyanate, Biphenyldiisocyanate, Diphenylmethandiisocyanate, Diisocyanatonaphathaline, Triphenylmethantriisocyanate, aber auch solche mit Isocyanatgruppen, die über eine Alkylengruppe, wie etwa eine Methylengruppe an einen Aromaten gebunden sind, wie Bis- und Tris-(isocyanatoalkyl)-benzole, -toluole sowie -xylole.

Bevorzugte Beispiele für aromatische Polyisocyanate sind:1,3-Phenylendiisocyanat, 1,4-Phenylendiisocyanat, 2,4-Toluylendiisocyanat, 2,5-Toluylendiisocyanat 2,6-Toluylendiisocyanat, 1,3-Xylylendiisocyanat, 1,4-Xylylendiisocyanat Tetramethyl-1,3-xylylendiisocyanat, Tetramethyl-1,4-xylylendiisocyanat, , 1,3-Bis(isocyanatomethyl)benzol, 1,4-Bis(isocyanatomethyl)benzol, Ethylphenyldiisocyanat, 2-Dodecyl-1,3-phenylendiisocyanat, 2,4,6-Triisopropyl-m-phenylendiisocyanat, 2,4,6-Trimethyl-1,3-phenylendiisocyanat, Xylendiisocyanat, 1,5-Naphthylendiisocyanat, 3,3'-Dimethyl-4,4'-biphenyldiisocyanat, 3,3'-Dimethoxy-4,4'-biphenyldiisocyanat, 3,3'-Dimethyl-4,4'-biphenyldiisocyanat, Diphenylenmethan-2,4'-diisocyanat, Diphenylenmethan-2,2'-diisocyanat, Diphenylenmethan-4,4'-diisocyanat, Triphenylmethan-4,4',4"-triisocyanat, 5-(p-Isocyanatobenzyl)-2-methyl-m-phenylendiisocyanat, 4,4-Diisocyanato-3,3,5,5-tetraethyldiphenylmethan, 5,5'-Ureylendi-o-tolyldiisocyanat, 4-[(5-Isocyanato-2-methylphenyl)methyl]-m-phenylendiisocyanat, 4-[(3-isocyanato-4-methylphenyl)methyl]-m-phenylendiisocyanat, 2,2'-Methylen-bis[6-(o-isocyanatobenzyl)phenyl]diisocyanat.

Bevorzugt werden aliphatische Isocyanate verwendet, die ein Kohlenstoffgrundgerüst (ohne die enthaltenen NCO-Gruppen) von 3 bis 30 Kohlenstoffatomen, bevorzugt von 4 bis 20 Kohlenstoffatomen aufweisen. Beispiele für aliphatische Polyisocyanate sind Bis-(isocyanatoalkyl)ether oder Alkandiisocyanate, wie Methandiisocyanat, Propandiisocyanate, Butandiisocyanate, Pentandiisocyanate, Hexandiisocyanate (z.B. Hexamethylendiisocyanat, HDI), Heptandiisocyanate (z.B. 2,2-Dimethylpentan-1,5-diisocyanat, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat, 5-Methylnonandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI), Bis-(isocyanatomethyl)norbornan (NBDI) oder 3(4)-Isocyanatomethyl-1-methyl-cyclohexylisocyanat (IMCI), Octagydro-4,7-methano-1H-indendiemthyldiisocyanat, Norbornendiisocyanat, 5-Isocyanato-1-(isocyanatomethyl)-1,3,3-trimethylcyclohexan, Ureylenbis(p-phenylenmethylene-p-phenylen)diiscoyanat.

Besonders bevorzugte Isocyanate sind Hexamethylendiisocyanat (HDI), Trimethyl-HDI (TMDI), 2-Methylpentan-1,5-diisocyanat (MPDI), Isophorondiisocyanat (IPDI), 1,3- sowie 1,4-Bis(isocyanatomethyl)cyclohexan (H₆XDI), Bis(isocyanatomethyl)norbornan (NBDI), 3(4)-Isocyanatomethyl-1-methyl-cyclohexylisocyanat (IMCI) und/oder 4,4'-Bis(isocyanatocyclohexyl)methan (H₁₂MDI) oder Gemische dieser Isocyanate.

Noch weiter bevorzugt liegen die Polyisocyanate als Präpolymere, Biurete, Isocyanurate, Iminooxadiazindione, Uretdione und/oder Allophanate vor, die durch Umsetzung der Isocyanatverbindungen mit Polyolen oder Polyaminen, einzeln oder als Gemisch, hergestellt werden können, und die eine mittlere Funktionalität von 2 oder größer aufweisen.

Beispiele für geeignete, kommerziell erhältliche Isocyanate sind Desmodur® N 3900, Desmodur® N 100, Desmodur® N 3200, Desmodur® N 3300, Desmodur® N 3600, Desmodur® N 3800, Desmodur® XP 2675, Desmodur® 2714, Desmodur® 2731, Desmodur® N 3400, Desmodur® XP 2679, Desmodur® XP 2731, Desmodur® XP 2489, Desmodur® E 3370, Desmodur® XP 2599, Desmodur® XP 2617, Desmodur® XP 2406, Desmodur® XP 2551, Desmodur® XP 2838, Desmodur® XP 2840, Desmodur® VL, Desmodur® VL 50, Desmodur® VL 51 (jeweils erhältlich von Covestro AG), Tolonate HDB, Tolonate HDT (erhältlich von Vencorex), Basonat HB 100 und Basonat HI 100 (erhältlich von BASF).

Als weitere Komponente des erfindungsgemäßen chemischen Dübels wird eine Polyasparaginsäureesterkomponente verwendet. Polyasparaginsäureester tragen zwei sekundäre Aminogruppen, die mit di- oder mehrfunktionellen Isocyanaten zu Polyharnstoffen reagieren können.

Die Reaktivität der Polyasparaginsäureester gegenüber Isocyanatgruppen ist im Vergleich zu den üblicherweise für die Herstellung von Polyharnstoffen verwendeten Polyaminen (hierin auch als *"handelsübliche Polyamine"* bezeichnet), wie z.B. 1,2-Diaminocyclohexan, 4,4'-Diaminodiphenylsulfon, 1,5-Diamino-2-methylpentan, Diethylentriamin, Hexamethylendiamin, Isophorondiamin, Triethylentetramin, Trimethylhexamethylendiamin und 5-Amino-1,3,3-trimethylcyclohexan-1-methylamin, deutlich reduziert. Dies führt zu dem Vorteil, dass die Verarbeitungszeit einer Zusammensetzung mit einer Polyisocyanatkomponente und einer Polyasparaginsäureesterkomponente verlängert wird, was zu einer besseren Handhabbarkeit durch den Anwender führt.

Für die vorliegende Erfindung geeignete Polyasparaginsäureester sind bevorzugt unter Verbindungen der allgemeinen Formel (I) ausgewählt, 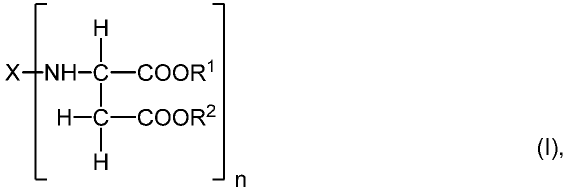 in der
R¹ und R² gleich oder verschieden sein können und einen organischen Rest bedeuten, der gegenüber Isocyanatgruppen inert ist,
X einen n-wertigen organischen Rest bedeutet, der gegenüber Isocyanatgruppen inert ist, und
n eine ganze Zahl von mindestens 2 bedeutet, bevorzugt von 2 bis 6, weiter bevorzugt von 2 bis 4 und besonders bevorzugt 2 bedeutet.

R¹ und R² bedeuten, bevorzugt unabhängig voneinander, eine unsubstituierte oder substituierte, verzweigte oder lineare Kohlenwasserstoffgruppe, bevorzugt eine C₁-C₉-Kohlenwasserstoffgruppe und weiter bevorzugt eine Methyl-, Ethyl- oder Butylgruppe.

In einer bevorzugten Ausführungsform steht X für eine n-wertige, vorzugsweise C₁-C₉-Kohlenwasserstoffgruppe, die durch Entfernen der primären Aminogruppen von einem aliphatischen oder araliphatischen Polyamin, bevorzugt durch Entfernen der primären Aminogruppen aus einem aliphatischen Polyamin, besonders bevorzugt Diamin, erhalten wird. Der Begriff Polyamin umfasst in diesem Zusammenhang Verbindungen mit zwei oder mehreren primären und gegebenenfalls zusätzlichen sekundären Aminogruppen, wobei die primären Aminogruppen bevorzugt endständig sind.

In einer weiter bevorzugten Ausführungsform steht X für einen Rest, wie er durch Entfernen der primären Aminogruppen aus 1,4-Diaminobutan, 1,6-Diaminohexan, 2,2,4- oder 2,4,4-Trimethyl-1,6-diaminohexan, 1-Amino-3,3,5-trimethyl-5-amionmethyl-cyclohexan, Diethylentriamin und Triethylentetramin erhalten wird

Bevorzugt steht n in Formel (I) für die Zahl 2.

In diesem Zusammenhang wird Bezug genommen auf die EP 0 403 921 A2 und EP 0 743 332 A1, deren Inhalte hiermit in diese Beschreibung aufgenommen werden.

Gemische von Polyasparaginsäureestern können ebenfalls verwendet werden.

Geeignete Polyasparaginsäureester werden von der Bayer MaterialScience AG unter der Marke DESMOPHEN® vertrieben. Kommerziell erhältliche Produkte sind beispielsweise DESMOPHEN® NH 1220, DESMOPHEN® NH 1420 und DESMOPHEN® NH 1520.

Die beschriebenen Polyasparaginsäureester können je nach gewünschter Reaktivität einzeln oder als Gemisch verwendet werden.

Die Polyasparaginsäureesterkomponente kann ferner eine weitere gegenüber Isocyanatgruppen reaktive Verbindung umfassen, insbesondere ein oder mehrere Polyamine, besonders bevorzugt ein oder mehrere Polyetherpolyamine, die als verbrückende Verbindungen dienen können. Besonders bevorzugt sind die oben beschriebenem Polyasparaginsäureester jedoch die einzigen gegenüber Isocyanatgruppen reaktiven Verbindungen in der Polyasparaginsäureesterkomponente.

Die Mengenverhältnisse der Polyisocyanatkomponente A und der Polyasparaginsäureesterkomponente B werden bevorzugt so gewählt, dass das Äquivalentverhältnis von Isocyanatgruppen der Polyisocyanatverbindung zu den gegenüber der Isocyanatgruppe reaktionsfähigen Gruppen der Polyasparaginsäureesterkomponente zwischen 0,3 und 1,7 liegt, bevorzugt zwischen 0,5 und 1,5 und weiter bevorzugt zwischen 0,7 und 1,3. Zur Einstellung der Geschwindigkeit der Aushärtung können Polyasparaginsäureester und eine Polyaminkomponente gemischt werden. In diesem Fall werden die Mengenverhältnisse so gewählt, dass das Äquivalentverhältnis von Isocyanatgruppen der Polyisocyanatverbindung zu den insgesamt gegenüber der Isocyanatgruppe reaktionsfähigen Amingruppen zwischen 0,3 und 1,7 liegt, bevorzugt zwischen 0,5 und 1,5 und weiter bevorzugt zwischen 0,7 und 1,3.

Wie beschrieben, besteht der Vorteil einer Verwendung von Polyasparaginsäureesterderivaten als Reaktivkomponente im Vergleich mit handelsüblichen Polyaminen darin, dass die Aminogruppen der Polyasparaginsäureester sterisch gehindert sind und deshalb die Aushärtung des chemischen Dübels langsamer erfolgt. Die Geschwindigkeit der Aushärtung des erfindungsgemäßen chemischen Dübels kann somit durch Mischen eines Polyasparaginsäureesters mit einer handelsübliche Polyaminkomponente gezielt eingestellt werden.

Der erfindungsgemäße chemische Dübel eignet sich insbesondere zur chemischen Befestigung von Bauteilen wie Ankergewindestangen, Bewehrungseisen, Gewindehülsen und Schrauben in Bohrlöchern, die in einen mineralischen Untergrund eingebracht sind.

Die Erfindung wird im Folgenden anhand eines Ausführungsbeispiels weiter beschrieben.

### Ausführungsbeispiele

### Beispiel 1

Zur Herstellung eines chemischen Dübels aus einer Zweikomponentenmasse wurden die folgenden, im Handel erhältlichen Produkte eingesetzt:
(A) Desmodur N 3600 - niedrigviskoses, aliphatisches Polyisocyanatharz auf Basis von trimerem Hexamethylendiisocyanat mit einem NCO-Gehalt von 23,0±0,5 Gew.-% (gemessen nach ISO 11909), einer Viskosität (23°C) von 1200±300 mPa·s (gemessen nach ISO 3219/A.3) und einem Äquivalentgewicht von etwa 183 g/eq.
(B) Desmophen NH 1420 - Polyasparaginsäureester auf Basis eines cycloaliphatischen Amins mit einer Aminzahl von 199-203 mg KOH/g (gemessen nach AFAM 2011-06054), einer Viskosität (25°C) von 900-2.000 mPa·s (gemessen nach DIN 53019) und einem Äquivalentgewicht von 276 g/eq.

69,4 g (57,83 Gew.-%) Desmophen NH 1420 wurde in einem Plastikbecher vorgelegt und 50,61 g (42,17 Gew.-%) Desmodur N 3600 zugegeben. Die beiden Komponenten wurden gemischt und der Haftabzugswert, die Schubspannung und die Temperaturabhängigkeit der Aushärtung dieser Mischung gemessen.

Zur Bestimmung des Haftabzugswertes (Pulloff)wurde eine runde Metallplatte mit einem Ring aus doppelseitigem Klebeband als Abstandshalter auf trockenem Standard Rocholl Beton als Untergrund befestigt und mit der Dübelmasse befüllt, wobei Betonplatten vom Rocholl analog ISO 13640 hergestellt wurden. Die Platten wurden nass geschliffen und haben eine Größe von 300 mm x 300 mm x 55 mm. Nach dem Aushärten bei Raumtemperatur über einen Tag wird mit einem Abzugsgerät die Klebkraft gemessen.

Die Schubspannung (innere Festigkeit) wurde anhand der Auszugsfestigkeit aus einer Stahlhülse nach einem Tag Aushärtung bei Raumtemperatur (+25°C) bestimmt, wobei die Mischung in eine Stahlhülse mit einem Innendurchmesser von 12 mm eingebracht und eine Ankerstange M8 eingeführt wurde.

### Verlgeichsbeispiele 1 und 2

Als Vergleich dienten zwei handelsübliche Dübelmassen: RE 500 (Fa. Hilti; Vergleichsbeispiel 1) und HIT-HY 200 (Fa. Hilti; Vergleichsbeispiel 2).

Im Vergleich zu handelsüblichen Dübelmassen RE500 und HY200 der Fa. Hilti wurden folgende Ergebnisse erhalten:

| | **Beispiel 1** | **Vergleichsbeispiel 1** | **Vergleichsbeispiel 2** |
|---|---|---|---|
| **Pulloff** | 6,40 MPa | 5,6 MPa | 1,7 MPa |
| **Schubspannung** | 30,5 MPa | 40,2 MPa | 31,2 MPa |
| **Aushärtedauer bei 7°C** ¹⁾ | 9 min | | |
| **Aushärtedauer bei 40°C ¹⁾** | 5 min | | |

| | | | |
|---|---|---|---|
| ¹⁾ gemessen durch MFFT (= Minimum Film Forming Temperature) | | | |

Die Ergebnisse zeigen, dass die erfindungsgemäßen Dübelmassen gegenüber den schnellhärtenden Systemen RE500 und HY200 bessere Haftabzugseigenschaften bei einer vergleichbaren inneren Festigkeit aufweisen. Gleichzeitig ist die Aushärtung der erfindungsgemäßen Dübelmassen kaum abhängig von der Umgebungstemperatur.

## Patentansprüche

1. Chemischer Dübel aus einer Mehrkomponentenmasse, die mindestens eine Polyisocyanatkomponente und eine Polyasparaginsäureesterkomponente umfasst.

2. Chemischer Dübel nach Anspruch 1, wobei die Polyisocyanatkomponente wenigstens ein aliphatisches und/oder ein aromatisches Isocyanat mit einer mittleren NCO-Funktionalität von 2 oder größer umfasst.

3. Chemischer Dübel nach Anspruch 1 oder 2, wobei die Polyisocyanatkomponente mindestens ein aromatisches Isocyanat umfasst, das aus 1,4-Phenylendiisocyanat, 2,4- und/oder 2,6-Toluylendiisocyanat, Xylylendiisocyanat, hydriertem Xylylendiisocyanat, Tetramethylxylylendiisocyanat, 1,5-Naphthylendiisocyanat, Diphenylenmethan-2,4'- und/oder -4,4'-diisocyanat, Triphenylmethan-4,4',4"-triisocyanat, Bis- und Tris-(isocyanatoalkyl)-benzol, -toluol und -xylol ausgewählt ist.

4. Chemischer Dübel nach Anspruch 1 oder 2, wobei die Polyisocyanatkomponente mindestens ein aliphatisches Isocyanat mit einem Kohlenstoffgrundgerüst von 3 bis 30 Kohlenstoffatomen umfasst, bevorzugt mit 4 bis 20 Kohlenstoffatomen, weiter bevorzugt ein aliphatisches Isocyanat, das aus Propandiisocyanaten, Butandiisocyanaten, Pentandiisocyanaten, Hexandiisocyanaten, Heptandiisocyanaten, Octandiisocyanaten, Nonandiisocyanaten, 2-Methylpentan-1,5-diisocyanat, Nonantriisocyanaten, Dekandiisocyanaten, Dekantriisocyanaten, Undekandiisocyanaten, Undekantriisocyanaten, Dodecandiisocyanaten, Dodecantriisocyanaten, 1,3- sowie 1,4-Bis-(isocyanatomethyl)cyclohexan, 3-Isocyanatomethyl-3,5,5-trimethylcyclohexylisocyanat, Bis-(4-isocyanatocyclohexyl)methan, Bis-(isocyanatomethyl)norbornan und 3(4)-Isocyanatomethyl-1-methyl-cyclohexylisocyanat ausgewählt ist.

5. Chemischer Dübel nach einem der vorhergehenden Ansprüche, wobei die Isocyanatkomponente ausgewählt ist aus der Gruppe bestehend aus Hexamethylendiisocyanat, Trimethyl-HDI, 2-Methylpentan-1,5-diisocyanat, Isophorondiisocyanat, 1,3- sowie 1,4-Bis(isocyanatomethyl)cyclohexan, Bis(isocyanatomethyl)norbornan, 3(4)-Isocyanatomethyl-1-methyl-cyclohexylisocyanat und 4,4'-Bis(iso- cyanatocyclohexyl)methan, und Mischungen davon.

6. Chemischer Dübel nach einem der vorhergehenden Ansprüche, wobei die Polyisocyanatkomponente als Präpolymer, Biuret, Isocyanurat, Iminooxadiazindion, Uretdion oder Allophanat vorliegt.

7. Chemischer Dübel nach einem der vorhergehenden Ansprüche wobei die Polyasparaginsäureesterkomponente aus Verbindungen der allgemeinen Formel (I) ausgewählt ist, 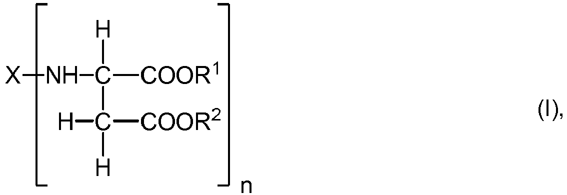 worin
R¹ und R² gleich oder verschieden sein können und einen organischen Rest bedeuten, der gegenüber Isocyanatgruppen inert ist,
X einen n-wertigen organischen Rest bedeutet, der gegenüber Isocyanatgruppen inert ist, und
n eine ganze Zahl von mindestens 2 bedeutet, bevorzugt von 2 bis 6, weiter bevorzugt von 2 bis 4 und besonders bevorzugt 2 bedeutet.

8. Chemischer Dübel nach Anspruch 7, wobei R¹ und R² unabhängig voneinander für eine unsubstituierte oder subsituierte, lineare oder verzweigte Kohlenwasserstoffgruppe stehen, bevorzugt eine C₁-C₉-Kohlenwasserstoffgruppe und weiter bevorzugt eine Methyl-, Ethyl- oder Butylgruppe bedeuten.

9. Chemischer Dübel nach Anspruch 7 oder 8, wobei X eine n-wertige Kohlenwasserstoffgruppe bedeutet, bevorzugt eine C₁-C₉-Kohlenwasserstoffgruppe, die durch Entfernen der primären Aminogruppen von einem aliphatischen oder araliphatischen Polyamin erhalten wird, bevorzugt durch Entfernen der primären Aminogruppen aus einem aliphatischen Polyamin, besonders bevorzugt aus einem Diamin.

10. Chemischer Dübel nach Anspruch 9, wobei X einen Rest bedeutet, wie er durch Entfernen der primären Aminogruppen aus 1,4-Diaminobutan, 1,6-Diaminohexan, 2,2,4- oder 2,4,4-Trimethyl-1,6-diaminohexan, 1-Amino-3,3,5-trimethyl-5-aminomethyl-cyclohexan, Diethylentriamin und Triethylentetramin erhalten wird, und wobei n in Formel (I) für die Zahl 2 steht.

11. Chemischer Dübel nach einem der vorangehenden Ansprüche, wobei die Polyasparaginsäureesterkomponente mindestens zwei verschiedene Polyasparaginsäureester umfasst.

12. Chemischer Dübel nach einem der vorangehenden Ansprüche, wobei die Polyasparaginsäureesterkomponente mindestens eine weitere gegenüber Isocyanatgruppen reaktionsfähige Verbindungen enthält, bevorzugt mindestens ein Polyamin und/oder ein Polyetherpolyamin.

13. Chemischer Dübel nach einem der vorangehenden Ansprüche, wobei die Polylsocyanatkomponente und die Polyasparaginsäureesterkomponente in einem Mengenverhältnis vorliegen, bei dem das Äquivalentverhältnis von Isocyanatgruppen zu gegenüber den Isocyanatgruppe reaktionsfähigen Gruppen zwischen 0,3 und 1,7 liegt, bevorzugt zwischen 0,5 und 1,5 und weiter bevorzugt zwischen 0,7 und 1,3.

14. Verwendung des chemischen Dübels gemäß einem der vorhergehenden Ansprüche zur chemischen Befestigung von Bauteilen in Bohrlöchern, die in einen mineralischen Untergrund eingebracht sind, bevorzugt zur chemischen Befestigung von Ankergewindestangen, Bewehrungseisen, Gewindehülsen und Schrauben.

## Claims

1. Chemical dowel made of a multicomponent mass, which comprises at least a polyisocyanate component and a poly aspartic acid ester component.

2. Chemical dowel according to claim 1, in which the polyisocyanate component comprises at least an aliphatic and/or an aromatic isocyanate with an average NCO functionality of 2 or more.

3. Chemical dowel according to claim 1 or 2, in which the polyisocyanate component comprises at least an aromatic isocyanate, which is selected from 1,4-phenylene diisocyanate, 2,4- and/or 2,6-toluylene diisocyanate, xylylene diisocyanate, hydrogenated xylylene diisocyanate, tetramethyl xylylene diisocyanate, 1,5-naphthylene diisocyanate, diphenylmethane-2,4'- and/or -4,4'-diisocyanate, triphenylmethane-4,4',4"-triisocyanate, bis and tris(isocyanatoalkyl)benzene, -toluene and -xylene.

4. Chemical dowel according to claim 1 or 2, in which the polyisocyanate component comprises at least an aliphatic isocyanate with a carbon basic structure of 3 to 30 carbon atoms, preferably with 4 to 20 carbon atoms, more preferably an aliphatic isocyanate, which is selected from propane diisocyanates, butane diisocyanates, pentane diisocyanates, hexane diisocyanates, heptane diisocyanates, octane diisocyanates, nonane diisocyanates, 2-methylpentane-1,5-diisocyanate, nonane triisocyanates, decane diisocyanates, decane triisocyanates, undecane diisocyanates, undecane triisocyanates, dodecane diisocyanates, dodecane triisocyanates, 1,3- and 1,4-bis(isocyanatomethyl)cyclohexane, 3-isocyanatomethyl-3,5,5-trimethylcyclohexyl isocyanate, bis-(4-isocyanatocyclohexyl)methane, bis-(isocyanatomethyl)norbornane and 3(4)- isocyanatomethyl-1-methyl-cyclohexyl isocyanate.

5. Chemical dowel according to one of the previous claims, in which the isocyanate component is selected from the group consisting of hexamethylene diisocyanate, trimethyl HDI, 2-methylpentane-1,5-diisocyanate, isophorone diisocyanate, 1,3- and 1,4-bis(isocyanatomethyl)cyclohexane, bis(isocyanatomethyl)norbornane, 3(4)-isocyanatomethyl-1-methyl-cyclohexyl isocyanate and 4,4'-bis(isocyanatocyclohexyl)methane and mixtures of them.

6. Chemical dowel according to one of the previous claims, in which the polyisocyanate component is present as prepolymer, biuret, isocyanurate, iminooxadiazindione, uretdione or allophanate.

7. Chemical dowel according to one of the previous claims, in which the poly aspartic acid ester component is selected from compounds of general formula (I), 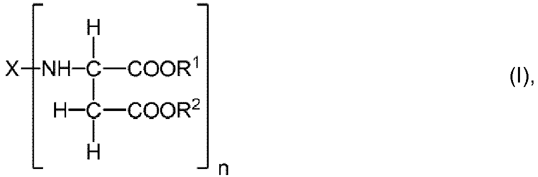 in which
R¹ and R² may be the same or different and mean an organic residue that is inert to isocyanate groups,
X mean an n-valent organic residue that is inert to isocyanate groups and
n means a whole number of at least 2, preferably from 2 to 6, more preferably from 2 to 4 and particularly preferably 2.

8. Chemical dowel according to claim 7, in which independently of each other R¹ and R² stand for an unsubstituted or substituted, linear or branched hydrocarbon group, preferably a C₁-C₉-hydrocarbon group and more preferably a methyl, ethyl or butyl group.

9. Chemical dowel according to claim 7 or 8, in which X means an n-valent hydrocarbon group, preferably a C₁-C₉-hydrocarbon group, which is obtained by removing the primary amino groups from an aliphatic or araliphatic polyamine, preferably by removing the primary amino groups from an aliphatic polyamine, particularly preferably from a diamine.

10. Chemical dowel according to claim 9, in which X means a residue, such as is obtained by removing the primary amino groups from 1,4-diaminobutane, 1,6-diaminohexane, 2,2,4- or 2,4,4-trimethyl-1,6-diaminohexane, 1-amino-3,3,5-trimethyl-5-aminomethyl cyclohexane, diethylene triamine and triethylene tetramine, and in which in formula (I) n stands for the number 2.

11. Chemical dowel according to one of the previous claims, in which the poly aspartic acid ester component comprises at least two different poly aspartic acid esters.

12. Chemical dowel according to one of the previous claims, in which the poly aspartic acid ester component contains at least a further compound that is reactive to isocyanate groups, preferably at least a polyamine and/or a polyether polyamine.

13. Chemical dowel according to one of the previous claims, in which the polyisocyanate component and the poly aspartic acid ester component are present in a quantitative proportion, in which the equivalent proportion of isocyanate groups to groups that are reactive to isocyanate groups is between 0.3 and 1.7, preferably between 0.5 and 1.5 and more preferably between 0.7 and 1.3.

14. Use of the chemical dowel according to one of the previous claims for chemically fastening components in drill holes that have been introduced into a mineral substrate, preferably for chemically fastening threaded anchor rods, reinforcing bars, threaded sleeves and screws.

## Revendications

1. Cheville chimique obtenue à partir d'une composition à plusieurs composants, comprenant au moins un composant polyisocyanate et un composant ester d'acide polyasparaginique.

2. Cheville chimique selon la revendication 1, dans laquelle le composant polyisocyanate comprend au moins un isocyanate aliphatique et/ou un isocyanate aromatique avec une fonctionnalité NCO moyenne de 2 ou plus.

3. Cheville chimique selon la revendication 1 ou 2, dans laquelle le composant polyisocyanate comprend au moins un isocyanate aromatique choisi parmi 1,4-phénylène diisocyanate, 2,4- et/ou 2,6-toluylène diisocyanate, xylylène diisocyanate, xylylène diisocyanate hydrogéné, tétraméthylxylylène diisocyanate, 1,5-naphthylène diisocyanate, diphénylènméthan-2,4'- et/ou - 4,4'-diisocyanate, triphénylméthan-4,4',4"-triisocyanate, bis- et tris-(isocyanatoalkyl)-benzol, -toluol et -xylol.

4. Cheville chimique selon la revendication 1 ou 2, dans laquelle le composant polyisocyanate comprend au moins un isocyanate aliphatique avec un squelette carboné possédant de 3 à 30 atomes de carbone, de manière préférée de 4 à 20 atomes de carbone, de manière plus préférée un isocyanate aliphatique choisi parmi un propane diisocyanate, un butane diisocyanate, un pentane diisocyanate, un hexane diisocyanate, un heptane diisocyanate, un octane diisocyanate, un nonane diisocyanate, un 2-méthylpentan-1,5-diisocyanate, un nonane triisocyanate, un décane diisocyanate, un décane triisocyanate, un undécane diisocyanate, un undécane triisocyanate, un dodécane diisocyanate, un dodécane triisocyanate, 1,3- et 1,4-bis-(isocyanatométhyl)cyclohexane, 3-isocyanatométhyl-3,5,5-triméthylcyclohexylisocyanate, bis-(4-isocyanatocyclohexyl)méthane, bis-(isocyanatométhyl)norbornane et 3(4)- isocyanatométhyl-1-méthyl-cyclohexylisocyanate.

5. Cheville chimique selon l'une des revendications précédentes, dans laquelle le composant isocyanate est choisi parmi le groupe constitué de hexaméthylène diisocyanate, triméthyl-HDI, 2-méthylpentan-1,5-diisocyanate, isophorone diisocyanate, 1,3- et 1,4-bis(isocyanatométhyl)cyclohexane, bis(isocyanatométhyl)norbornane, 3(4)-isocyanatométhyl-1-méthyl-cyclohexyle isocyanate et 4,4'-bis(iso- cyanatocyclohexyl)méthane, et des mélanges de ceux-ci.

6. Cheville chimique selon l'une des revendications précédentes, dans laquelle le composant polyisocyanate est présent sous forme de prépolymère, de biuret, d'isocyanurate, d'iminooxadiazinedione, d'uretdione ou d'allophanate.

7. Cheville chimique selon l'une des revendications précédentes, dans laquelle le composant ester d'acide polyasparaginique est choisi parmi des composés de Formule générale (I) : 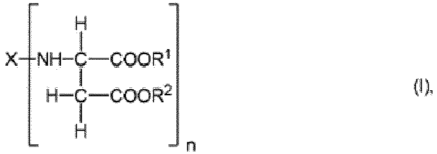 dans laquelle
R¹ et R² peuvent être identiques ou différents et représentent un radical organique qui est inerte par rapport aux groupes isocyanate,
X représente un radical organique n-valent qui est inerte par rapport aux groupes isocyanate, et
n représente un nombre entier au moins égal à 2, de manière préférée compris entre 2 et 6, de manière plus préférée compris entre 2 et 4 et de manière encore plus préférée égal à 2.

8. Cheville chimique selon la revendication 7, dans laquelle R¹ et R² représentent, indépendamment l'un de l'autre, un groupe hydrocarbure linéaire ou ramifié, non substitué ou substitué, de manière préférée un groupe hydrocarbure en C₁ à C₉ et de manière plus préférée un groupe méthyle, éthyle ou butyle.

9. Cheville chimique selon la revendication 7 ou 8, dans laquelle X représente un groupe hydrocarbure n-valent, de préférence un groupe hydrocarbure en C₁ à C₉ qui est obtenu en éliminant les groupes amino primaires d'une polyamine aliphatique ou araliphatique, de manière préférée en éliminant les groupes amino primaires d'une polyamine aliphatique, de manière particulièrement préférée d'une diamine.

10. Cheville chimique selon la revendication 9, dans laquelle X représente un radical qui a été obtenu en éliminant les groupes amino primaires du 1,4-diaminobutane, 1,6-diaminohexane, 2,2,4- ou 2,4,4-triméthyl-1,6-diaminohexane, 1-amino-3,3,5-triméthyl-5-aminométhyl-cyclohexane, diéthylèntriamine et triéthy-lèntétramine, et dans laquelle n représente le nombre 2 dans la Formule (I).

11. Cheville chimique selon l'une des revendications précédentes, dans laquelle le composant ester d'acide polyasparaginique comprend au moins deux esters d'acide polyasparaginique différents.

12. Cheville chimique selon l'une des revendications précédentes, dans laquelle le composant ester d'acide polyasparaginique contient au moins un autre composé capable de réagir avec des groupes isocyanate, de préférence au moins une polyamine et/ou une polyéther-polyamine.

13. Cheville chimique selon l'une des revendications précédentes, dans laquelle le composant polyisocyanate et le composant ester d'acide polyasparaginique sont présents en une certaine proportion, le rapport équivalent des groupes isocyanate par rapport aux groupes capables de réagir avec le groupe isocyanate étant compris entre 0,3 et 1,7, de manière préférée entre 0,5 et 1,5 et de manière plus préférée entre 0,7 et 1,3.

14. Utilisation de la cheville chimique selon l'une des revendications précédentes pour la fixation chimique d'éléments de construction dans des trous percés, qui sont insérés dans un substrat minéral, de préférence pour la fixation chimique de tiges d'ancrage filetées, de fers d'armature, de douilles filetées et de vis.
